# EUROPÄISCHE PATENTANMELDUNG

(11) **EP 2 248 740 A1**
(43) Veröffentlichungstag der Anmeldung: **10.11.2010**
(21) Anmeldenummer: 09159393.9
(22) Anmeldetag: 05.05.2009
(51) Int. Cl.: B65G 1/04

(54) **Regalbediengerät für ein Regallager**

(71) Anmelder: Bargstedt Handlingsysteme GmbH, 21745 Hemmoor (DE)
(72) Erfinder: Peisker, Torsten, 21709 Himelpforten (DE)
(74) Vertreter: HOFFMANN EITLE

(57) **Zusammenfassung**

Die Erfindung betrifft eine Verfahrvorrichtung (10), insbesondere eine Hubvorrichtung zum gekoppelten Verfahren von zwei oder mehr Werkstückeinheiter (16.1 bis 16.3) zwischen mehreren Aufnahme- und Ablagepositionen. Die Verfahrvorrichtung (10) umfasst dabei eine Mehrzahl von Aufnahmeelementen (14.1 bis 14.6), durch welche die Werkstückeinheiten (16.1 bis 16.3) aufnehm- und ablegbar sind. Die Verfahrvorrichtung (10) ist dabei dadurch gekennzeichnet, dass die Aufnahmeelemente (14.1 bis 14.6) eingerichtet sind, einzelne Werkstückeinheiten (16.1,16.2,16.3) individuell aufzunehmen und/oder abzulegen. Darüber hinaus wird eine Speichervorrichtung mit einer solchen Verfahrvorrichtung (10) und ein Verfahren zum effizienten Betreiben der Verfahrvorrichtung (10) beschrieben.

## Beschreibung

### Technisches Gebiet

Die Erfindung betrifft eine Verfahrvorrichtung, insbesondere eine Hubvorrichtung, zum gekoppelten Verfahren von zwei oder mehr Werkstückeinheiten zwischen mehreren Aufnahme- und Ablagepositionen, die eine Mehrzahl von Aufnahmeelementen umfasst, durch welche die Werkstückeinheiten aufnehm- und ablegbar sind. Ferner betrifft die Erfindung eine Speichervorrichtung mit einer Einfördereinrichtung zum Einfördern und Bereithalten von Werkstückeinheiten, einer Ausfördereinrichtung zum Ausfördern von Werkstückeinheiten und einer ersten Speichereinrichtung, die eine Mehrzahl von bevorzugt auf unterschiedlichen Ebenen angeordneten Speicherabschnitten aufweist. Darüber hinaus betrifft die Erfindung ein Verfahren zum Speichern von Objekten, bevorzugt von Werkstücken und/oder Werkstückeinheiten.

### Stand der Technik

Aus dem Stand der Technik ist bekannt, dass eine Vielzahl von aufeinander folgenden Werkstücken oder Werkstückeinheiten über einen Flächenförderer, beispielsweise ein Transportband, einen Rollenförderer etc. entlang einer Bearbeitungsstraße verfahren werden.

Ein Anwendungsbeispiel für eine derartige Anlage findet sich im Rahmen der Herstellung von Möbelteilen, wo Einzelteile über eine Fördervorrichtung zwischen verschiedenen Bearbeitungsstationen verfahren werden. Ein großer Teil solcher Anlagen ist zur Herstellung einer Vielzahl einheitlich gestalteter Möbel eingerichtet und an jeder Bearbeitungsstation bearbeitet eine Maschine somit jeweils gleichartige Werkstücke, die jeweils Teile eines Möbels sind. Um ein vollständiges Möbel zu erhalten ist es dabei häufig nötig, dass einzelne Bearbeitungsmaschinen, zum Beispiel zum Bohren, Sägen, zur Oberflächenbearbeitung etc. von mehreren verschiedenen Werkstücken oder gleichartigen Werkstücken in verschiedenen Ausrichtungen zu durchlaufen sind.

Die Bearbeitungsmaschinen sind zum größten Teil für wiederholtes, immer wiederkehrendes Ausführen eines bestimmten Arbeitsschritts eingerichtet. Bei einem Wechsel des zu bearbeitenden Werkstücks bzw. einer Änderung von dessen Orientierung muss die Beareitungsmaschine dann umgestellt werden, um auf den geänderten Arbeitsgang (Bohrerposition, Lochtiefe, Kantenposition etc.) angepasst zu sein. Nur wenige, sehr kostenintensive Bearbeitungsmaschinen sind im Gegensatz dazu in der Lage, während des laufenden Betriebs individuell auf zu bearbeitende Werkstücke derart zu reagieren, dass die zu bearbeitenden Werkstücke weitgehend unabhängig von ihrer Art oder Ausrichtung korrekt bearbeitet werden.

Die Nachfrage nach individuell gestalteten Werkstücken, insbesondere nach individuellen Möbeln steigt stark an. Solche Werkstücke sind hinsichtlich bestimmter Ausgestaltungsmerkmale auf die speziellen Wünsche und Anforderungen eines Kunden abgestimmt (z.B. verschiedene Größen und Formen von Möbeln), was einen hohen Aufwand in der Fertigung der Werkstücke bedeutet, da die entsprechenden Bearbeitungsmaschinen jeweils individuell auf die zu bearbeitenden Werkstücke eingestellt werden müssen. Um diesem Nachteil zu begegnen wird versucht, möglichst viele Teile eines Möbels, die in mehreren oder allen individuell gestalteten Möbeln einer Sorte zu verwenden sind, in zusammenhängenden Chargen zu bearbeiten, um häufiges Umstellen der verwendeten Bearbeitungsmaschinen möglichst zu vermeiden.

Bei einer derartigen Bearbeitung der Werkstücke stimmt jedoch die Reihenfolge der Werkstücke ggf. nicht mit einer gewünschten oder benötigten Reihenfolge überein. Dies ist insbesondere dann von Bedeutung, wenn die Werkstücke in geeigneten Packeinheiten, die z.B. jeweils ein vollständiges Möbelstück bilden, zusammengefasst werden sollen. Aus diesem Grund ist ein umfangreiches Umsortieren der im Sinne der gewünschten Endreihenfolge chaotisch gefertigten Werkstücke nötig, dessen Effizienz mit den bisherigen Methoden und Gerätschaften unbefriedigend ist.

### Darstellung der Erfindung

Die Aufgabe der vorliegenden Erfindung besteht darin, eine dem oben genannten technischen Gebiet zugehörige Vorrichtung zu konstruieren, die eine effiziente Herstellung von individuell gestalteten Möbeln ermöglicht bzw. ein entsprechendes Verfahren zu entwickeln.

Die Aufgabe wird durch den jeweiligen Gegenstand der unabhängigen Ansprüche gelöst. Erfindungsgemäß umfasst eine Verfahrvorrichtung zum gekoppelten Verfahren von zwei oder mehr Werkstückeinheiten zwischen mehreren Aufnahme- und Ablagepositionen eine Mehrzahl von Aufnahmeelementen, durch welche die Werkstückeinheiten aufnehm- und ablegbar sind. Bei der Verfahrvorrichtung handelt es sich insbesondere um eine Hubvorrichtung. Die Verfahrvorrichtung ist erfindungsgemäß **dadurch gekennzeichnet, dass** die Aufnahmeelemente dazu eingerichtet sind, einzelne Werkstücke oder Werkstückeinheiten individuell aufzunehmen und/oder abzulegen.

Dadurch, dass die Aufnahmeelemente wie oben beschrieben eingerichtet sind, ist es der Verfahrvorrichtung möglich, eine Mehrzahl einzelner Werkstücke und/oder

Werkstückeinheiten gemeinsam und gleichzeitig individuell steuerbar zwischen mehreren Aufnahme- und Ablagepositionen zu verfahren. Dadurch wird die Verfahrvorrichtung in ihrem Betrieb besonders effizient, weil einerseits gleichzeitig eine Mehrzahl von verschiedenen Werkstücken und/oder Werkstückeinheiten durch sie gehandhabt werden, andererseits aber bei individuell verschiedenen Aufnahme- und/oder Ablagepositionen für einzelne Werkstücke und/oder Werkstückeinheiten kein separater Verfahrvorgang für die entsprechende Werkstückeinheit und/oder das entsprechende Werkstück nötig ist. Es ist also möglich, mit der erfindungsgemäßen Verfahrvorrichtung Werkstückeinheiten, die in einer chaotischen Reihenfolge zu der Verfahrvorrichtung zugeführt werden, ausgehend von den chaotischen Aufnahmepositionen an definierten und insbesondere sortierten Ablagepositionen abzulegen. Somit wird ein besonders effizientes Sortierverfahren möglich.

In einer bevorzugten Ausführungsform sind die Aufnahmeelemente einzeln oder gruppenweise unabhängig voneinander beweglich, insbesondere verfahrbar und/oder verschwenkbar. Durch eine entsprechende Ausgestaltung der Verfahrvorrichtung sind die Aufnahmeelemente besonders leicht dazu eingerichtet, einzelne Werkstückeinheiten individuell aufzunehmen und/oder abzulegen. Es ist hierbei anzumerken, dass "einzelne Werkstückeinheiten" auch einzelne Gruppen von Werkstückeinheiten, beispielsweise nebeneinander liegende Werkstücke oder eine Gruppe gleichartiger Werkstückeinheiten bezeichnet, die von der Verfahrvorrichtung gleichzeitig und unabhängig von anderen Werkstückeinheiten aufnehm- und/oder ablegbar sind. Daneben ist grundsätzlich auch denkbar, dass einzelne oder alle Aufnahmeelemente einzelne Werkstückeinheiten dadurch individuell aufnehmen und/oder ablegen können, dass sie eine Verbindung zwischen den entsprechenden Aufnahmeelementen und Werkstückeinheiten individuell einrichten und/oder lösen, beispielsweise durch Saugnäpfe, Magneten, Klammern oder ähnliche Einrichtungen.

Bevorzugt sind die Aufnahmeelemente jeweils in gegenüberliegende Richtungen verfahrbar und/oder verschwenkbar. Die Aufnahmeelemente lassen sich also beispielsweise von einer Mittelposition sowohl in eine erste Richtung als auch in eine der ersten gegenüberliegende Richtung verfahren und erreichen somit Aufnahme- und Ablagepositionen zu zwei Seiten der Verfahrvorrichtung. Dies steigert die Effizienz eines durch die Verfahrvorrichtung durchgeführten Verfahrens zusätzlich.

Mit Vorteil sind die Aufnahmeelemente zum Untergreifen der Werkstücke eingerichtet und bevorzugt als Zinken ausgebildet. Eine solche Ausgestaltung der Aufnahmeelemente ist technisch besonders einfach realisierbar und eignet sich zum Aufnehmen einer Vielzahl verschiedener Werkstücke. Dabei können die Werkstücke sowohl unterschiedliche Formen als auch unterschiedliche Größen aufweisen, ohne dass dadurch die Möglichkeiten, durch die Verfahrvorrichtung entsprechende Werkstücke zu handhaben, eingeschränkt werden. Alternativ ist es jedoch auch möglich, dass Aufnahmeeiemente zum Umschließen der Werkstücke, zum Ansaugen desselben oder andersartigen Aufnehmen von Werkstücken eingerichtet sind.

In einer bevorzugten Ausführungsform sind die Aufnahmeelemente länglich und entlang ihrer Längsrichtung individuell verfahrbar und/oder verlängerbar, wobei bevorzugt zumindest einige, besonders bevorzugt alle Aufnahmeelemente jeweils insbesondere Teleskopelemente aufweisen. Aufnahmeelemente, die entlang ihrer Längsrichtung individuell verfahrbar und/oder verlängerbar sind, stellen wiederum eine besonders einfache Ausgestaltung dar, die auf bewährte mechanische Realisierungen zum Verfahren der Aufnahmeelemente bzw. der Teile der Aufnahmeelemente, die zum tatsächlichen Kontakt mit einem Werkstück vorgesehen sind, zurückgreift. Teleskopelemente haben sich hierfür als besonders geeignet gezeigt. Alternativ ist es jedoch auch möglich, dass die Aufnahmeelemente entlang einer anderen als ihrer Längsrichtung verfahrbar und/oder verlängerbar sind oder auf andere Weise das individuelle Aufnehmen und/oder Ablegen von Werkstückeinheiten ermöglichen.

In einer weiter bevorzugten Ausführungsform der Verfahrvorrichtung erstrecken sich die Längsrichtungen der Aufnahmeelemente dabei senkrecht zu einer Richtung, entlang der die Aufnahmeelemente gekoppelt verfahrbar sind. Eine derartige Ausgestaltung der Verfahrvorrichtung ermöglicht es also, dass die Aufnahmeelemente einerseits in einer ersten und ggf. zweiten, von der ersten linear unabhängigen Richtung gekoppelt verfahrbar und andererseits in einer dritten, hierzu senkrechten Richtung individuell verfahrbar und/oder verlängerbar sind. Dies bedeutet, dass ein zumindest zweidimensionaler, bevorzugt dreidimensionaler Raum durch die Aufnahmeelemente abgefahren werden kann. Ein dreidimensionaler Raum ist dann durch jedes der Aufnahmeelemente erreichbar, wenn beispielsweise die gekoppelte Verfahrbarkeit der Aufnahmeelemente, beispielsweise durch einen gemeinsamen Träger oder dergleichen in einer Ebene, also in zwei linear unabhängigen Richtungen ermöglicht ist. Eine Verfahrvorrichtung, bei der eine Mehrzahl von Aufnahmeelementen in zwei linear unabhängigen Richtungen verfahrbar ist, stellt eine weitere bevorzugte Ausführungsform der erfindungsgemäßen Verfahrvorrichtung dar.

Mit Vorteil sind durch die Verfahrvorrichtung mehrere Werkstückeinheiten gleichzeitig verfahrbar und bevorzugt gleichzeitig aufnehm- und/oder ablegbar. Eine solche Ausführungsform der Verfahrvorrichtung ermöglicht einen besonders effizienten Betrieb beim Verfahren von mehreren Werkstückeinheiten im Gegensatz zu Verfahrvorrichtungen, die nur zum gleichzeitigen Verfahren einzelner Werkstückeinheiten geeignet sind. Gleichzeitig bedeutet hier auch gemeinsam, d.h. in einem Schritt und "als eine Einheit".

Eine erfindungsgemäße Speichervorrichtung umfasst eine Einfördereinrichtung zum Einfördern und Bereithalten von Werkstücken und/oder Werkstückeinheiten, eine Ausfördereinrichtung zum Ausfördern von Werkstücken und/oder Werkstückeinheiten und eine erste Speichereinrichtung, die eine Mehrzahl von bevorzugt auf unterschiedlichen Ebenen angeordneten Speicherabschnitten aufweist. Die Speichervorrichtung ist erfindungsgemäß **dadurch gekennzeichnet, dass** sie ferner eine erste Verfahrvorrichtung zum Bewegen von Werkstücken und/oder Werkstückeinheiten zwischen der Einfördereinrichtung und der Speichereinrichtung, zwischen verschiedenen Speicherabschnitten der Speichereinrichtung und/oder zwischen der Speichereinrichtung und der Ausfördereinrichtung aufweist, wie sie oben beschrieben wurde.

Eine entsprechende Speichervorrichtung ermöglicht es, dass Werkstückeinheiten von der Einfördereinrichtung abgenommen und zwischengelagert werden können, bevor sie, gegebenenfalls in veränderter Reihenfolge, auf eine Ausfördereinrichtung gelegt werden. Das Zwischenlagern in der Speichervorrichtung erfolgt dabei durch die Verfahrvorrichtung derart, dass eine möglichst effiziente Einlagerung von Werkstückeinheiten in der Speichervorrichtung stattfindet. Hierzu ist es auch möglich, dass Werkstückeinheiten innerhalb der Speichereinrichtung umgesetzt werden, beispielsweise um eine Vorsortierung zu erreichen. Durch die oben beschriebene Verfahrvorrichtung lassen sich die Werkstückeinheiten folglich einzeln oder gruppenweise aufnehmen und an individuellen Ablagepositionen ablegen. Entsprechend ist eine individuelle Aufnahme der Werkstückeinheiten aus der Speichereinrichtung durch die Verfahrvorrichtung möglich. Bevorzugt weist die Speichervorrichtung eine zweite Verfahrvorrichtung auf und die Verfahrvorrichtungen sind auf verschiedenen Seiten der ersten Speichereinrichtung angeordnet. Damit ist es beispielsweise möglich, dass durch die erste Verfahrvorrichtung Werkstücke in die Speichereinrichtung eingelagert und durch die zweite Verfahrvorrichtung aus der Speichereinrichtung herausgenommen werden. Daneben ist es auch möglich, dass beide Verfahrvorrichtungen in dieselbe Speichereinrichtung einlagern und aus ihr herausnehmen, wobei sich die beiden Verfahrvorrichtungen in jedem Fall gegenseitig nicht behindern, wenn sie auf unterschiedlichen Seiten der Speichereinrichtung verfahren, die Speichereinrichtung also zwischen sich haben. Die Speichereinrichtung kann in diesem Fall bevorzugt als "Durchreiche" konstruiert sein, so dass jeder Speicherabschnitt von beiden Verfahrvorrichtungen gleichwertig erreichbar ist.

In einer bevorzugten Ausführungsform weist die Speichervorrichtung eine zweite Speichereinrichtung auf und die Speichereinrichtungen sind auf verschiedenen Seiten der ersten Verfahrvorrichtung angeordnet. Dabei ist die Verfahrvorrichtung bevorzugt so ausgeführt, dass ihre Aufnahmeelemente jeweils in gegenüberliegende Richtungen verfahrbar und/oder verschwenkbar sind, wie oben beschrieben ist. Alternativ ist es auch möglich, dass die Verfahrvorrichtung sich drehen kann, um so die auf zwei Seiten vorhandenen Speichereinrichtungen zu erreichen. Auch eine solche Speichervorrichtung ermöglicht eine besonders effiziente Einlagerung und Sortierung der Werkstückeinheiten, in dem durch eine Verfahrvorrichtung in zwei auf zwei Seiten der Verfahrrichtung angeordnete Speichereinrichtungen eingelagert werden kann. Damit reduzieren sich die Wege, die durch die Verfahrvorrichtung zu bewältigen sind bzw. die Anzahl möglicher Speicherabschnitte, in denen Werkstückeinheiten abzulegen oder aufzunehmen sind, steigt bei Beibehaltung des Verfahrwegs der Verfahrvorrichtung an. Mit Vorteil können die oben genannten zwei bevorzugten Ausführungsformen auch miteinander kombiniert werden, insofern beispielsweise eine erste Verfahrvorrichtung auf zwei Seiten von sich jeweils eine Speichereinrichtung aufweist und eine Speichereinrichtung oder beide Speichereinrichtungen auf ihrer jeweils anderen Seite eine Verfahrvorrichtung hat oder haben. Eine derartige Kombination lässt sich auch beliebig fortsetzen.

Mit Vorteil ist die Einfördereinrichtung der Speichervorrichtung und/oder die Ausfördereinrichtung der Speichervorrichtung eine Flächenfördereinrichtung. Bevorzugt ist sie als Rollenförderer ausgeführt. Ein Rollenförderer ist dabei insbesondere deshalb vorteilhaft, weil Werkstückeinheiten durch eine Verfahrvorrichtung mit länglichen, die Werkstückeinheit untergreifenden und zwischen den einzelnen Rollen des Rollenförderers eingreifenden Aufnahmeelementen besonders leicht von dem Rollenförderer aufgenommen bzw. auf ihn abgelegt werden können.

Bevorzugt sind die Aufnahmeelemente der Verfahrvorrichtung senkrecht durch den jeweiligen Förderpfad der Einfördereinrichtung und/oder Ausfördereinrichtung, insbesondere durch Zwischenräume zwischen einzelnen Rollen einer als Rollenförderer ausgeführten Fördereinrichtung verfahrbar. Eine solche Ausführung der Verfahrvorrichtung ermöglicht ein besonders einfaches Aufnehmen bzw. Ablegen von Werkstückeinheiten von der Einfördereinrichtung und/oder auf die Ausfördereinrichtung. Am Beispiel eines im Wesentlichen horizontal verlaufenden Rollenförderers kann das insbesondere bedeuten, dass die Aufnahmeelemente vertikal zwischen den Rollen des Rollenförderers hindurch von einer Position unterhalb der entsprechenden Förderebene in eine Position oberhalb der Förderebene bzw. in umgekehrter Richtung verfahrbar ist.

In einer bevorzugten Ausführungsform sind die Aufnahmepositionen und/oder die Ablagepositionen der Verfahrvorrichtung zumindest teilweise in den Speicherabschnitten angeordnet.

Ein erfindungsgemäßes Verfahren zum Speichern von Objekten, bevorzugt von Werkstücken und/oder Werkstückeinheiten, umfasst die folgenden Schritte: Zunächst wird eine Mehrzahl von Objekten durch eine Einfördereinrichtung, insbesondere durch eine Flächenfördereinrichtung, bevorzugt einen Rollenförderer eingefördert. Die Mehrzahl der Objekte wird dadurch in den Aktionsbereich einer ersten Verfahrvorrichtung transportiert. In einem zweiten Schritt werden die Objekte durch eine erste Verfahrvorrichtung, die bevorzugt wie oben beschrieben ausgeführt ist, aufgenommen und verfahren und in einem dritten Schritt selektiv an individuellen Ablagepositionen abgelegt. Dabei können sowohl einzelne als auch mehrere Objekte gleichzeitig selektiv an individuellen Ablagepositionen abgelegt werden.

Ein Beispiel hierfür ist, dass vier Objekte durch die Verfahrvorrichtung aufgenommen und verfahren werden und jeweils zwei Objekte gleichzeitig an einer für die entsprechenden beiden Objekte vorgesehenen Ablageposition abgelegt werden. In diesem Beispiel ist es jedoch auch möglich, alle vier Objekte gleichzeitig, jedes Objekt einzeln oder beliebige Kombinationen von Objekten an entsprechend individuellen Ablagepositionen abzulegen.

Durch die Anwendung dieses Verfahrens ist es besonders effizient, die Mehrzahl von Objekten, die Werkstücke und/oder Werkstückeinheiten sein können, nach einem Einfördern bzw. während des Transportierens durch eine entsprechende Einrichtung aufzunehmen und zwischenzulagern bzw. zu sortieren.

Entsprechend einem bevorzugten Verfahren zum Speichern von Objekten werden danach einzelne oder mehrere Objekte von individuellen Aufnahmepositionen selektiv aufgenommen und in einem nachfolgenden Schritt verfahren und auf einer Ausfördereinrichtung abgelegt. Bei der Ausfördereinrichtung handelt es sich insbesondere wieder um eine Flächenfördereinrichtung, bevorzugt einen Rollenförderer. Der Schritt des Verfahrens und Ablegens der Objekte auf der Ausfördereinrichtung wird dabei durch die Verfahrvorrichtung bewirkt, die bevorzugt auch das Aufnehmen und Verfahren der Objekte im zweiten Schritt vornimmt. Daneben ist es jedoch auch möglich, dass es sich bei der Verfahrvorrichtung zum Verfahren und Ablegen der Objekte um eine andere Verfahrvorrichtung als diejenige zum Aufnehmen und Verfahren der Objekte handelt. In einem nachfolgenden Schritt werden die Objekte dann durch die Ausfördereinrichtung ausgefördert.

Das bevorzugte Verfahren ermöglicht einen kompletten Zyklus, der von einem Einfördern einer Mehrzahl von Objekten über eine Zwischenspeicherung bzw. Sortierung in einer Speichereinrichtung oder einem ähnlichen Ort bis zum Ausfördern der Objekte in einer den entsprechenden Anforderungen genügenden veränderten Reihenfolge reicht.

Mit Vorteil werden die Objekte durch das selektive Ablegen und/oder selektive Aufnehmen einzelner Objekte in eine vorbestimmte relative Anordnung zueinander gebracht. Das bedeutet, dass einzelne Objekte wunschgemäß abgelegt und wieder aufgenommen werden können und somit in eine relative Anordnung, beispielsweise eine Reihenfolge auf einer Verfahrvorrichtung, die schließlich mit einer Reihenfolge auf der Ausfördereinrichtung übereinstimmen kann, gebracht werden können.

Bevorzugt werden die Objekte durch die Verfahrvorrichtung gekoppelt verfahren und während des gekoppelten Verfahrens einzeln selektiv abgelegt und/oder aufgenommen. Das bedeutet, dass die Verfahrvorrichtung eine Mehrzahl von Objekten gleichzeitig aufnimmt und verfährt und ausgehen von dieser Mehrzahl aufgenommener Objekte einzelne Objekte ablegt oder hinzunimmt bzw. austauscht, um somit einerseits ein auf individuelle Anforderungen abstimmbares Verfahren zu ermöglichen, das andererseits eine hohe Effizienz bei der Verarbeitung der Objekte sicherstellt.

Bei einem bevorzugten Verfahren werden die Objekte entlang einer Speichereinrichtung verfahren, die insbesondere eine Mehrzahl von bevorzugt auf unterschiedlichen Ebenen angeordneten Speicherabschnitten aufweist. Ein Beispiel einer solchen Speichereinrichtung wurde oben beschrieben. Somit ist es möglich, dass die Objekte einfach und effizient zwischengespeichert werden und das gesamte Verfahren somit weiter an Effizienz gewinnt.

Die Ablagepositionen und/oder die Aufnahmepositionen, an denen die Objekte abgelegt bzw. aufgenommen werden, befinden sich bevorzugt in einer Speichereinrichtung. Weiter bevorzugt wird das Verfahren dabei an einer oben beschriebenen Speichervorrichtung angewendet, die eine besonders effiziente und leicht auszuführende Möglichkeit zur Realisierung des Verfahrens ermöglicht.

Weitere bevorzugte Ausführungsformen ergeben sich aus der nachfolgenden Figurenbeschreibung und der Gesamtheit der Ansprüche.

### Kurze Figurenbeschreibung

- Fig. 1: zeigt eine Draufsicht einer Verfahrvorrichtung in einer ersten Ausführungsform.
- Fig. 2: zeigt eine Seitenansicht eines Ausschnitts der Verfahrvorrichtung aus Fig. 1.
- Fig. 3: ist eine Seitenansicht einer Speichervorrichtung mit einer bevorzugten Verfahrvorrichtung.
- Fig. 4: zeigt eine andere Seitenansicht einer Speichervorrichtung in einer weiteren bevorzugten Ausführungsform.

### Wege zur Ausführung der Erfindung

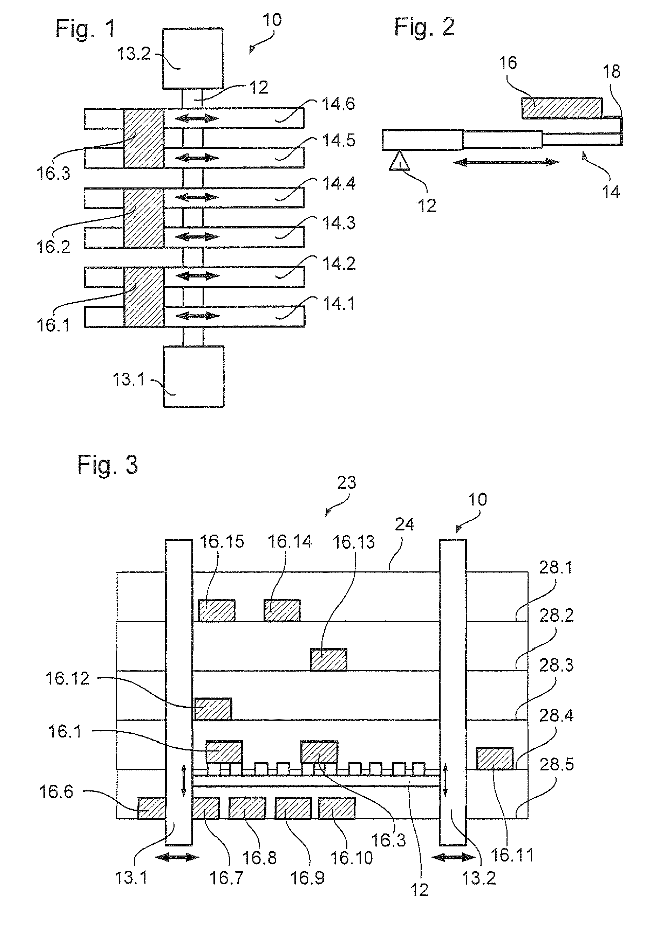

Fig. 1 zeigt eine Draufsicht einer Verfahrvorrichtung 10 in einer bevorzugten Ausführungsform. Auf einem Querträger 12, der an zwei Hubelementen 13.1, 13.2 vertikal verfahrbar ist, befinden sich beispielhaft sechs einzelne Aufnahmeelemente 14.1 bis 14.6. Die Aufnahmeelemente sind dazu geeignet, Werkstückeinheiten 16.1 bis 16.3 aufzunehmen und individuell abzulegen bzw. erneut aufzunehmen. Die Aufnahmeelemente 14.1 bis 14.6 sind in dieser bevorzugten Ausführungsform als Zinken ausgeführt, die sich entlang ihrer Längsrichtung verfahren lassen. Die Werkstückeinheiten 16.1 bis 16.3 sind dabei alle auf einer gleichen Seite des Querträgers 12 auf den Aufnahmeelementen 14.1 bis 14.6 angeordnet.

Durch Verfahren einzelner Aufnahmeelemente ist es möglich, einzelne Werkstückeinheiten 16.1, 16.2, 16.3 beispielsweise in Längsrichtung der Aufnahmeelemente 14.1 bis 14.6 weiter von dem Querträger 12 der Verfahrvorrichtung 10 zu beabstanden. Bei einem damit gekoppelten vertikalen Verfahren durch die Hubvorrichtungen 13.1, 13.2 ist es beispielsweise möglich, ein entsprechendes Werkstück oder eine Werkstückeinheit an einer Ablageposition abzulegen, indem die ausgefahrenen Aufnahmeelemente mit dem Werkstück darauf durch Zwischenräume an der Ablageposition nach unten hindurch treten und das Werkstück somit an der Ablageposition ablegen. Entsprechend ist es auch möglich, durch Verfahren der Aufnahmeelemente in Längsrichtung und beispielsweise gleichzeitiges oder nachfolgendes Hochfahren der Verfahrvorrichtung 10, einzelne Werkstücke oder Werkstückeinheiten von geeigneten Ablagepositionen aufzunehmen.

Die Aufnahmeelemente in Fig. 1 lassen sich selbstverständlich nahezu beliebig modifizieren. Insbesondere ist es möglich, dass die Aufnahmeelemente ein Werkstück nicht untergreifen, sondern beispielsweise einzelne Objekte durch ein geeignetes Saugelement oder einen Magneten festhalten.

Fig. 2 zeigt eine teilweise Seitenansicht der Verfahrvorrichtung 10 aus Fig. 1. An dem Querträger 12 ist exemplarisch ein Aufnahmeelement 14 angebracht, auf dem eine Werkstückeinheit 16 aufliegt. Die Werkstückeinheit 16 liegt auf einem Halterungselement 18 auf, das an einem Ende des Aufnahmeelements 14 angebracht ist. Das Aufnahmeelement 14 ist dabei teleskopartig ausfahrbar, so dass eine Verschiebung der Haltevorrichtung 18 und der Werkstückeinheit 16 darauf längs der Ausrichtung des Aufnahmeelements 14 besonders einfach möglich ist. Unabhängig von der Verschiebung lässt sich das Aufnahmeelement 14 über den Querträger 12 durch die Hubelemente 13 (nicht dargestellt) vertikal verfahren und die gesamte Verfahrvorrichtung 10 lässt sich bevorzugt auch längs des Querträgers 12 verfahren, so dass die Werkstückeinheit 16 in drei Dimensionen beweglich ist.

Alternativ ist es auch möglich, dass die Aufnahmeelemente, von denen in Fig. 2 beispielhaft das Aufnahmeelement 14 gezeigt ist, als Schwenkmechanismus ausgeführt sind. Dabei ist zu beachten, dass die Aufnahmeelemente einzeln oder gruppenweise unabhängig voneinander beweglich sind. Bevorzugt lassen sich die Aufnahmeelemente dabei in jeweils gegenüberliegende Richtung verfahren und/oder verschwenken. Das bedeutet, dass eine Werkstückeinheit 16 auf einer Haltevorrichtung 18 an einem Aufnahmeelement 14 aus einer Mittelposition sowohl in eine erste Richtung (links in Fig. 1 und 2) als auch in eine zweite Richtung (rechts in Fig. 1 und 2) verfahrbar ist, so dass sie auf verschiedene Seiten des Querträgers 12 der Verfahrvorrichtung gebracht werden kann. Daneben ist auch denkbar, dass sich die Verfahrvorrichtung beispielsweise um eine vertikale Achse drehen kann, um hinsichtlich der Bewegung zum Verfahren der Werkstückeinheiten zusätzliche Flexibilität zu erlangen.

Fig. 3 zeigt eine Seitenansicht einer Speichereinrichtung 24 mit einer sich davor befindlichen Verfahrvorrichtung 10 als Teile einer Speichervorrichtung 23. Die Verfahrvorrichtung 10 entspricht der den Fig. 1 und 2 gezeigten, so dass hierauf nicht näher einzugehen ist. In der Speichereinrichtung 24 befinden sich fünf Regalböden 28.1 bis 28.5, die auf fünf unterschiedlichen Ebenen angeordnet sind und jeweils eine Vielzahl von Speicherabschnitten aufweisen. Auf jedem der Regalböden 28.1 bis 28.5 sind ein oder mehrere Werkstückeinheiten 16.1 bis 16.15 ablegbar.

Die Regalböden 28.1 bis 28.5 sind dabei so ausgestaltet, dass sie beispielsweise durch stangenförmige Auflageelemente zum Lagern von Werkstückeinheiten 16.1 bis 16.15 darauf geeignet sind und es gleichzeitig erlauben, dass die Zinken 14.1 bis 14.6 der Verfahrvorrichtung 10 zwischen die Auflageelemente der Regalböden 28.1 bis 28.5 verfahren werden können. Somit ist eine besonders einfache Ablage und Aufnahme der Werkstückeinheiten durch die Verfahrvorrichtung 10 in der Speichereinrichtung 24 gewährleistet. Abhängig von der Ausführung der Aufnahmeelemente 14.1 bis 14.6 der Verfahrvorrichtung 10 ist eine solche Ausführung der Auflagen der Speichereinrichtung 24 jedoch nicht nötig, was beispielsweise für den Fall eines von oben auf ein Objekt wirkenden Sauggreifers gilt.

In Fig. 3 ist zu sehen, dass einerseits Werkstückeinheiten 16.6 bis 16.10 aneinander anliegend nebeneinander in einem Regalboden 28.5 der Speichereinrichtung 24 angeordnet sind. Daneben sind jedoch weitere Werkstückeinheiten 16.11 bis 16.15 auf verschiedenen Regalböden 28.1 bis 28.5 angeordnet und so verteilt, dass sie durch die Verfahrvorrichtung 10 einzeln aufzunehmen sind. Die Verfahrvorrichtung 10 steuert einzelne Werkstückeinheiten derart an, dass die Werkstückeinheiten in einer vorbestimmten Reihenfolge auf der Verfahrvorrichtung 10 angeordnet sind, wenn die Verfahrvorrichtung 10 die Werkstückeinheiten aus der Speichereinrichtung 24 aufnimmt, um sie anschließend auf einer Ausfördervorrichtung abzulegen. Die Verfahrvorrichtung 10 ist dabei entlang der gesamten Stirnfläche der Speichereinrichtung 24 verfahrbar, d.h., dass sie jeden Speicherabschnitt in der Speichereinrichtung erreicht und an der entsprechenden Position einzelne Aufnahmeelemente in die Speichereinrichtung 24 hineinfahren kann. Die Verfahrvorrichtung 10 ist dabei eingerichtet, zwischen einzelnen aufzunehmenden Werkstückeinheiten derart zu verfahren, dass insgesamt ein möglichst kurzer Weg durch die Verfahrvorrichtung 10 zurückzulegen ist. Dies bedeutet insbesondere, dass die Werkstückeinheiten beliebig auf der Verfahrvorrichtung aufgenommen werden können, so dass die zeitliche Reihenfolge der Aufnahme bzw. Ablage einzelner Werkstückeinheiten unabhängig von der räumlichen Reihenfolge der Werkstückeinheiten auf der Verfahrvorrichtung ist. Dies steigert die Effizienz des entsprechenden verfahrens deutlich.

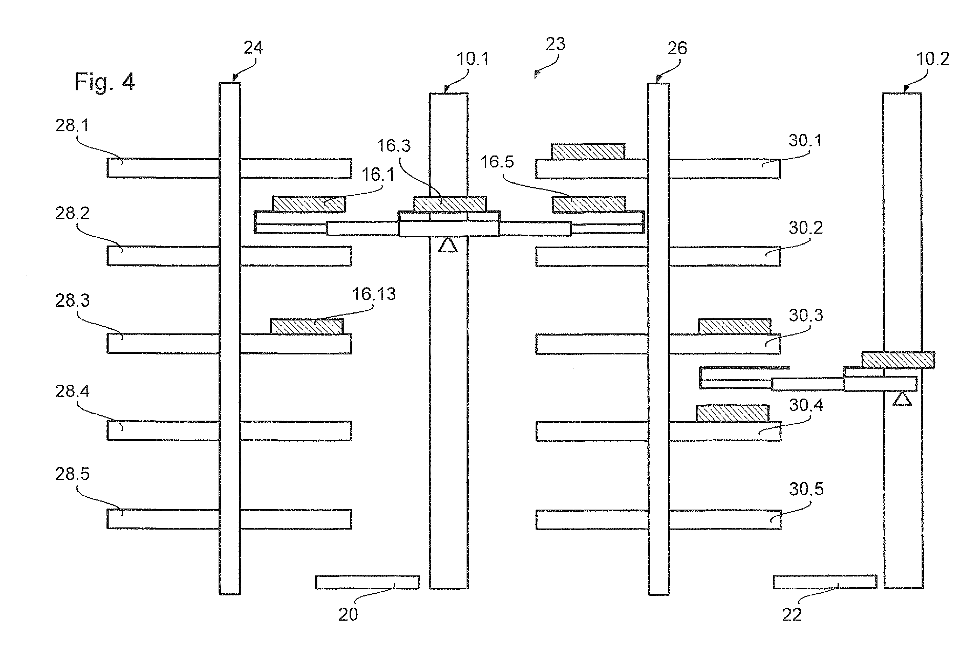

Fig. 4 zeigt eine weitere Ausführungsform einer Speichervorrichtung 23. Auf der linken Seite der Fig. 4 ist eine erste Speichereinrichtung 24 gezeigt, die der in Fig. 3 Gezeigten entspricht. Auf der rechten Seite der Fig. 4 ist darüber hinaus eine zweite Speichereinrichtung 26 zu sehen, die analog zu der ersten Speichereinrichtung 24 fünf Regalböden 30.1 bis 30.5 enthält.

Zwischen den beiden Speichereinrichtungen 24 und 26 befindet sich eine erste Verfahrvorrichtung 10.1, die insbesondere entsprechend der Darstellungen in Fig. 1 und 2 ausgeführt sein kann. Die erste Verfahrvorrichtung 10.1 zwischen den beiden Speichereinrichtungen 24 und 26 ist dazu geeignet, Werkstückeinheiten 16.1 bis 16.15 von einem Rollenförderer 20, der als Einfördervorrichtung dient, in eine der Speichereinrichtungen 24, 26 einzulagern. Eine zweite Verfahrrichtung 10.2 auf der rechten Seite der rechten Speichereinrichtung 26 ist dabei zusätzlich vorgesehen, um einzelne Werkstückeinheiten aus der Speichereinrichtung 26 aufzunehmen und auf einer Ausfördereinrichtung 22 abzulegen.

Parallel dazu kann die erste Verfahrvorrichtung 10.1 einzelne Werkstücke 16.4 oder auch Gruppen von Werkstücken sowohl aus der ersten Speichereinrichtung 24 aufnehmen, in der ersten Speichereinrichtung 24 ablegen, in der zweiten Speichereinrichtung 26 ablegen oder von der zweiten Speichereinrichtung 26 aufnehmen sowie von der Einfördereinrichtung 20 aufnehmen bzw. dort ablegen. Die zweite Verfahrvorrichtung 10.2 ist dazu geeignet, einzelne Werkstücke oder Gruppen von Werkstücken aus der zweiten Speichereinrichtung 26 aufzunehmen oder darin abzulegen und diese auf der Ausfördervorrichtung 22 abzulegen bzw. von dieser aufzunehmen.

Bei einem Speicherverfahren kann beispielsweise durch die erste Verfahrvorrichtung 10.1 ein Werkstück von der Einfördereinrichtung 20 aufgenommen und in einer der Speichereinrichtungen 24, 26 abgelegt werden. Die Ablagepositionen der Werkstückeinheiten können dabei individuell, beispielsweise entsprechend den Platzverhältnissen in den entsprechenden Speichereinheiten 24, 26 oder entsprechend einer gewünschten Ordnung verteilt sein. Danach kann die Verfahreinheit 10.1 einzelne Werkstücke oder Gruppen von Werkstücken von verschiedenen, getrennten oder zusammen liegenden Aufnahmepositionen aufnehmen und entweder in eine andere Speichereinrichtung 26, 24 verfahren, innerhalb der einen Speichereinrichtung 24, 26 umsetzen oder auf der Einfördereinrichtung 20 absetzen.

Die Einfördereinrichtung 20 eignet sich somit grundsätzlich auch zum Herausbefördern von Werkstücke. Alternativ und zusätzlich ist es auch möglich, dass die zweite Verfahrvorrichtung 10.2 nach dem selektiven Ablegen einzelner oder mehrere Objekte an individuellen Ablagepositionen in der Speichereinrichtung 26, einzelne Objekte, insbesondere also Werkstücke und/oder Werkstückeinheiten aus der Speichereinrichtung 26 aufnimmt, in der Speichereinrichtung 26 an einem anderen Ort ablegt oder auf der Ausfördereinrichtung 22 absetzt.

Durch die oben beschriebenen Vorrichtungen und Verfahren ist es also möglich, Werkstücke und/oder Werkstückeinheiten, die in einer chaotischen Reihenfolge durch eine Einfördervorrichtung oder anderweitig zur Verfügung gestellt werden, in eine vorbestimmte Reihenfolge zu bringen, ohne dabei ineffiziente Sortierschritte vornehmen zu müssen.

## Patentansprüche

1. Verfahrvorrichtung (10), insbesondere Hubvorrichtung, zum gekoppelten Verfahren von zwei oder mehr Werkstückeinheiten (16.1...16.3) zwischen mehreren Aufnahme- und Ablagepositionen, umfassend eine Mehrzahl von Aufnahmeelementen (14.1...14.6), durch welche die Werkstückeinheiten (16.1...16.3) aufnehm- und ablegbar sind,
**dadurch gekennzeichnet, dass**
die Aufnahmeelemente (14.1...14.6) eingerichtet sind, einzelne Werkstückeinheiten (16.1 ... 16.3) individuell aufzunehmen und/oder abzulegen.

2. Verfahrvorrichtung (10) nach Anspruch 1, wobei die Aufnahmeelemente (14.1...14.6) einzeln oder gruppenweise unabhängig voneinander beweglich, insbesondere verfahrbar und/oder verschwenkbar sind.

3. Verfahrvorrichtung (10) nach Anspruch 1 oder 2, wobei die Aufnahmeelemente (14.1...14.3) jeweils in gegenüberliegende Richtungen verfahrbar und/oder verschwenkbar sind.

4. Verfahrvorrichtung (10) nach einem der vorstehenden Ansprüche, wobei die Aufnahmeelemente (14.1...14.6) zum Untergreifen der Werkstückeinheiten (16.1...16.3) eingerichtet und bevorzugt als Zinken ausgebildet sind.

5. Verfahrvorrichtung (10) nach einem der vorstehenden Ansprüche, wobei die Aufnahmeelemente (14.1...14.6) länglich und entlang ihrer Längsrichtung individuell verfahrbar und/oder verlängerbar sind, wobei bevorzugt zumindest einige, besonders bevorzugt alle Aufnahmeelemente (14.1...14.6) jeweils Teleskopelemente aufweisen.

6. Verfahrvorrichtung (10) nach Anspruch 5, wobei sich die Längsrichtungen der Aufnahmeelemente (14.1...14.6) senkrecht zu einer Richtung erstrecken, entlang der die Aufnahmeelemente (14.1...14.6) gekoppelt verfahrbar sind.

7. Verfahrvorrichtung (10) nach einem der vorstehenden Ansprüche, durch die mehrere Werkstückeinheiten (16.1... 16.3) gleichzeitig verfahrbar und sie bevorzugt gleichzeitig aufnehm- und/oder ablegbar sind.

8. Speichervorrichtung (23) mit
einer Einfördereinrichtung (20) zum Einfördern und Bereithalten von Werkstückeinheiten (16.1...16.15), einer Ausfördereinrichtung (22) zum Ausfördern von Werkstückeinheiten (16.1...16.15) und
einer ersten Speichereinrichtung (24), die eine Mehrzahl von bevorzugt auf unterschiedlichen Ebenen (28.1...28.5) angeordneten Speicherabschnitten aufweist,
**dadurch gekennzeichnet, dass**
die Speichervorrichtung (23) ferner eine erste Verfahrvorrichtung (10; 10.1) zum Bewegen von Werkstückeinheiten (16.1 ... 16.15) zwischen der Einfördereinrichtung (20) und der Speichereinrichtung (24), zwischen verschiedenen Speicherabschnitten der Speichereinrichtung (24) und/oder zwischen der Speichereinrichtung (24) und der Ausfördereinrichtung (22) nach einem der Ansprüche 1 bis 7 aufweist.

9. Speichervorrichtung (23) nach Anspruch 8, wobei die Speichervorrichtung (23) eine zweite Verfahrvorrichtung (10.2) aufweist und die Verfahrvorrichtungen (10.1, 10.2) auf verschiedenen Seiten der ersten Speichereinrichtung (24) angeordnet sind.

10. Speichervorrichtung (23) nach Anspruch 8 oder 9, wobei die Speichervorrichtung (23) eine zweite Speichereinrichtung (26) aufweist und die Speichereinrichtungen (24, 26) auf verschiedenen Seiten der ersten Verfahrvorrichtung (10; 10.1) angeordnet sind, wobei die erste Verfahrvorrichtung (10; 10.1) bevorzugt gemäß Anspruch 3 ausgeführt ist.

11. Verfahren zum Speichern von Objekten (16.1...16.15), bevorzugt Werkstücken und/oder Werkstückeinheiten, welches die folgenden Schritte umfasst:
a) Einfördern einer Mehrzahl von Objekten durch eine Einfördereinrichtung (20), insbesondere eine Flächenfördereinrichtung, bevorzugt einen Rollenförderer,
b) Aufnehmen und Verfahren der Objekte durch eine erste Verfahrvorrichtung (10; 10.1), bevorzugt nach einem der Ansprüche 1 bis 7, und
c) selektives Ablegen einzelner oder mehrerer Objekte (16.1...16.15) an individuellen Ablagepositionen.

12. Verfahren nach Anspruch 11, ferner umfassend
d) selektives Aufnehmen einzelner oder mehrerer Objekte (16.1...16.15) von individuellen Aufnahmepositionen,
e) Verfahren und Ablegen der Objekte auf einer Ausfördereinrichtung (22), insbesondere einer Flächenfördereinrichtung, bevorzugt einem Rollenförderer, durch die Verfahrvorrichtung und
f) Ausfördern der Objekte (16.1...16.15) durch die Ausfördereinrichtung (22).

13. Verfahren nach Anspruch 11 oder 12, wobei die Objekte (16.1...16.15) durch das selektive Ablegen und/oder selektive Aufnehmen einzelner Objekte (16.1...16.15) in eine vorbestimmte relative Anordnung gebracht werden.

14. Verfahren nach einem der Ansprüche 11 bis 13, wobei die Objekte (16.1...16.15) durch die Verfahrvorrichtung (10; 10.1, 10.2) gekoppelt verfahren werden und während des gekoppelten Verfahrens einzelne Objekte (16.1...16.15) selektiv abgelegt und/oder aufgenommen werden.

15. Verfahren nach einem der Ansprüche 11 bis 14, wobei die Objekte (16.1...16.15) entlang einer Speichereinrichtung (24, 26), die insbesondere eine Mehrzahl von bevorzugt auf unterschiedlichen Ebenen (28.1...28.5) angeordneten Speicherabschnitten aufweist, verfahren werden.

16. Verfahren nach einem der Ansprüche 11 bis 15, wobei sich die Ablagepositionen und/oder die Aufnahmepositionen in einer Speichereinrichtung (24, 26) befinden.
